# EUROPEAN PATENT APPLICATION

(11) **EP 4 130 748 A1**
(43) Date of publication of application: **08.02.2023**
(21) Application number: 21775637.8
(22) Date of filing: 18.01.2021
(51) Int. Cl.: G01N 35/00

(54) **AUTOMATIC ANALYSIS SYSTEM**

(30) Priority: 23.03.2020 JP 2020050598
(71) Applicant: HITACHI HIGH-TECH CORPORATION, Tokyo 105-6409 (JP)
(72) Inventor: NAKAMURA, Takuya, Tokyo 105-6409 (JP)
(74) Representative: MERH-IP Matias Erny Reichl Hoffmann Patentanwälte PartG mbB
(86) International application number: PCT/JP2021/001437
(87) International publication number: WO 2021/192537

(57) **Abstract**

Provided is an automatic analysis device that shortens the confirmation time for calibration or precision management. This automatic analysis system includes an analysis device configured to perform an analysis for deriving a property of a specimen on the basis of the relative relationship between a measured value of a standard specimen for which the property is known and a measured value of the specimen, and a display device that displays information about calibration or precision management carried out on the analysis device using the standard specimen, the system being characterized in that the display device displays: a request list including request information about request for the calibration and/or the precision management; and/or a preparation list that displays, in an empty manner, a field of the standard specimen that corresponds to an in-rack position number where the standard sample is not to be placed, as preparation information about preparation of the standard specimen to be used, in accordance with the request, in the calibration and/or the precision management.

## Description

### Technical Field

The present invention relates to an automatic analysis system that analyzes a sample, and particularly relates to calibration and quality control.

### Background Art

An automatic analysis system is used to measure a concentration of a specific component contained in a sample such as blood or urine. More specifically, absorbance, an amount of luminescence, and the like of a reaction solution obtained by reacting the sample and a reagent are measured, and the concentration of the specific component is calculated based on measurement results of the absorbance, the amount of luminescence, and the like and a calibration curve. The calibration curve is created by executing calibration, which is measurement using a plurality of standard solutions having known concentrations. As quality control of the automatic analysis system, it is confirmed that a temporal change of the calibration curve is within a management range. It is desirable that operations of the calibration and the quality control are efficiently executed.

PTL 1 discloses an automatic analyzer that displays a measurement status of each standard solution used for calibration for each item in order to efficiently execute an operation of the calibration.

### Citation List

### Patent Literature

PTL 1: JP-A-2015-072287

### Summary of Invention

### Technical Problem

However, in PTL 1, it may take time to execute checking in each step of calibration or quality control. More specifically, it may be necessary to check a plurality of screens in order to check a request content, a preparation status, and an obtained result for the calibration or the quality control.

Accordingly, an object of the invention is to provide an automatic analyzer that shortens a checking time in calibration or quality control.

### Solution to Problem

In order to achieve the above object, the invention provides an automatic analysis system including: an analyzer configured to execute, based on a relative relationship between a measurement value of a standard sample whose property is known and a measurement value of a sample, an analysis to derive a property of the sample; and a display device configured to display information related to calibration or quality control executed for the analyzer using the standard sample, in which the display device is configured to display at least one of a request list including request information related to a request for at least one of the calibration and the quality control and a preparation list including preparation information related to preparation of the standard sample used for at least one of the calibration and the quality control in response to the request, and the preparation list displays a name of the standard sample and an in-rack position number assigned to a position of a rack in which the standard sample is provided in association with each other, and displays a blank in a field of a standard sample corresponding to an in-rack position number in which the standard sample is not to be provided.

### Advantageous Effects of Invention

According to the invention, it is possible to provide the automatic analyzer that shortens a checking time in the calibration or the quality control.

### Brief Description of Drawings

[FIG. 1] FIG. 1 is a diagram showing an example of a structure of an automatic analysis system.
[FIG. 2] FIG. 2 is a diagram showing an example of a structure of the automatic analysis system including a plurality of analyzers.
[FIG. 3] FIG. 3 is a diagram showing an example of a function and structure of an operation PC, an information management PC, and a mobile terminal that are provided in the automatic analysis system.
[FIG. 4] FIG. 4 is a diagram showing an example of a flow of processing executed by an information management unit of the information management PC.
[FIG. 5A] FIG. 5A is a diagram showing an example of a request list of calibration displayed on the mobile terminal.
[FIG. 5B] FIG. 5B is a diagram showing an example of a request list of quality control displayed on the mobile terminal.
[FIG. 6A] FIG. 6A is a diagram showing an example of a preparation list of the calibration displayed on the mobile terminal.
[FIG. 6B] FIG. 6B is a diagram showing an example of a preparation list of the quality control displayed on the mobile terminal.
[FIG. 7A] FIG. 7A is a diagram showing an example of a result list of the calibration displayed on the mobile terminal.
[FIG. 7B] FIG. 7B is a diagram showing an example of a result list of the quality control displayed on the mobile terminal.
[FIG. 8A] FIG. 8A is a diagram showing an example of a detailed result of calibration of a colorimetric analysis item displayed on the mobile terminal.
[FIG. 8B] FIG. 8B is a diagram showing an example of a graph of a calibration trace of the colorimetric analysis item displayed on the mobile terminal.
[FIG. 9] FIG. 9 is a diagram showing an example of a detailed result of calibration of an electrolyte analysis item displayed on the mobile terminal.
[FIG. 10A] FIG. 10A is a diagram showing an example of a detailed result of quality control displayed on the mobile terminal.
[FIG. 10B] FIG. 10B is a diagram showing an example of a daily chart of the quality control displayed on the mobile terminal.
[FIG. 11] FIG. 11 is a diagram showing an example of a routine operation monitor screen displayed on a fixed monitor device.
[FIG. 12] FIG. 12 is a diagram showing an example of a calibration monitor screen displayed on the fixed monitor device.
[FIG. 13] FIG. 13 is a diagram showing an example of a calibration result monitor screen displayed on the fixed monitor device.

### Description of Embodiments

An automatic analysis system according to the invention includes an analyzer and a display device. The analyzer is configured to execute, based on a relative relationship between a measurement value of a standard sample whose property is known and a measurement value of a sample, an analysis to derive a property of the sample. The display device displays information related to calibration or quality control executed for the analyzer using the standard sample.

The display device displays at least one of a request list including request information related to a request for at least one of the calibration and the quality control, a preparation list including preparation information related to preparation of the standard sample used for at least one of the calibration and the quality control in response to the request, and a result list including result information related to a result of execution of at least one of the calibration and the quality control in response to the request.

According to the automatic analysis system having such a configuration, since at least one of the request list, the preparation list, and the result list of the calibration or the quality control is displayed, it is possible to shorten a time required for checking in each step of a request, preparation, and result.

Hereinafter, a preferred embodiment of the automatic analysis system according to the invention will be described with reference to the accompanying drawings. In the following description and the accompanying drawings, components having same function and structure are denoted by same reference signs, and the repeated description thereof is omitted. The drawings schematically represent an embodiment, and a real object may be shown in a simplified manner.

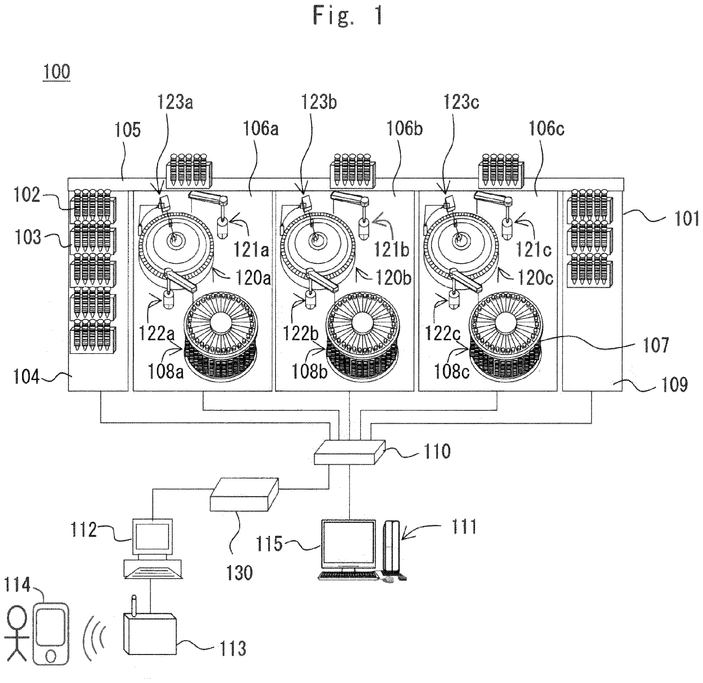

A structure of an automatic analysis system 100 will be described with reference to FIG. 1. The automatic analysis system 100 in FIG. 1 includes a communication device 110, an operation unit PC 111, a communication device 130, an information management PC 112, a wireless communication device 113, and a mobile terminal 114 in addition to one automatic analyzer 101. The operation unit PC 111 includes a fixed monitor device 115 on which information in the automatic analyzer 101 is displayed.

The operation unit PC 111 is, for example, a desktop computer, and controls the automatic analyzer 101 via the communication device 110 such as a hub. The information management PC 112 is, for example, a desktop computer, is connected to the communication device 110 via the communication device 130, and acquires information such as a device state in the operation unit PC 111 via the communication device 110.

The mobile terminal 114 is a terminal carried and used by an operator, for example, a smartphone, a tablet terminal, a notebook PC, and executes wireless communication with the information management PC 112 via the wireless communication device 113 such as a wireless LAN router, and displays information acquired from the operation unit PC 111. The number of mobile terminals 114 connected to the wireless communication device 113 is not limited as long as the number of mobile terminals 114 is one or more. The operator can remotely manage information of the automatic analyzer 101 through the mobile terminal 114 while checking information displayed on the mobile terminal 114.

The automatic analyzer 101 includes a sample input unit 104, a sample transport unit 105, sample analysis units 106a, 106b, and 106c, a sample storage unit 109, and the like. The number of sample analysis units provided in the automatic analyzer 101 is not limited to three as shown in FIG. 1, and may be one or more.

A sample cup 102 into which a sample such as blood or urine supplied from a patient or a standard sample used for calibration and quality control is dispensed is loaded on a sample rack 103. The sample rack 103 on which the sample cup 102 is loaded is input to the sample input unit 104. When the operation unit PC 111 is requested to start measurement, the sample rack 103 is transported toward the sample storage unit 109 by the sample transport unit 105. Sample analysis units 106a, 106b, and 106c are connected to the sample transport unit 105, and the sample is measured in the course of transportation.

The sample analysis unit 106a includes a reaction disc 120a, a sample dispensing unit 121a, a reagent disc 108a, a reagent dispensing unit 122a, and a photometric unit 123a. A reagent container 107 in which a reagent to be reacted with the sample is enclosed is stored in the reagent disc 108a. The sample analysis units 106b and 106c have a similar configuration as the sample analysis unit 106a, and include reaction discs 120b and 120c, sample dispensing units 121b and 121c, reagent discs 108b and 108c, reagent dispensing units 122b and 122c, and photometric units 123b and 123c.

The sample transported by the sample transport unit 105 is dispensed to the reaction disc 120a by, for example, the sample dispensing unit 121a provided in the sample analysis unit 106a. The reagent enclosed in the reagent disc 108a is dispensed into the reaction disc 120a into which the sample is dispensed by the reagent dispensing unit 122a, and the sample and the reagent are reacted. Absorbance and a scattered light intensity of a reaction solution obtained by the reaction are measured by the photometric unit 123a. The absorbance measured by the photometric unit 123a is converted into a concentration of a specific component in the sample based on the relative relationship between the measurement value of the standard sample and the measurement value of the sample, for example, a calibration curve. The calibration curve is created by executing calibration, which is measurement using a plurality of standard solutions having known concentrations. When it is confirmed that a temporal change of the calibration curve is within a management range, the quality control of the automatic analysis system 100 is executed.

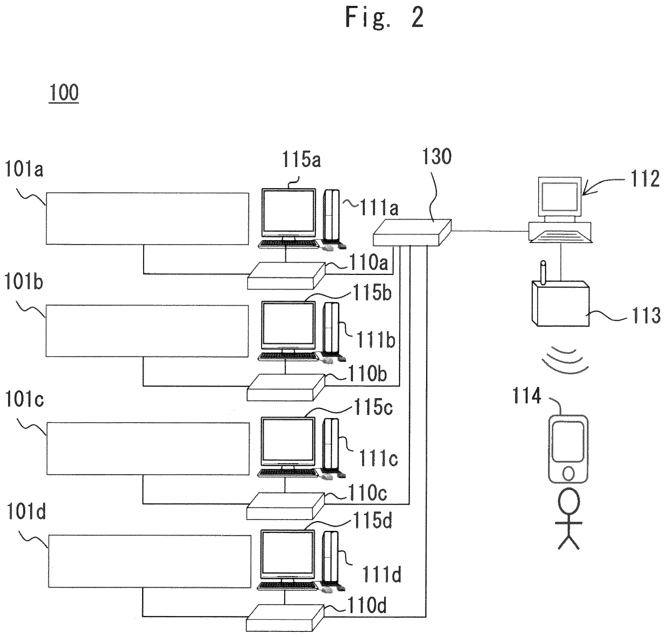

A structure of an automatic analysis system 100 including a plurality of automatic analyzers 101a, 101b, 101c, and 101d will be described with reference to FIG. 2. The automatic analysis system 100 in FIG. 2 includes the communication device 130, the information management PC 112, the wireless communication device 113, and the mobile terminal 114, and the four automatic analyzers 101a to 101d are connected to communication devices 110a to 110d, operation unit PCs 111a to 111d, and fixed monitor devices 115a to 115d, respectively.

The information management PC 112 is connected to the automatic analyzers 101a to 101d and the operation units PCs 111a to 111d via the communication device 130 and the communication devices 110a to 110d. The number of automatic analyzers 101 connected via the communication device 130 is not limited as long as the number of automatic analyzers 101 is one or more. When there are a plurality of automatic analyzers 101, a structure, a model, and the like may be different. The information management PC 112 collects information of the automatic analyzers 101a to 101d connected via the communication device 130 and the communication devices 110a to 110d. The mobile terminal 114 executes wireless communication with the information management PC 112 via the wireless communication device 113, and displays information acquired from the operation unit PCs 111a to 111d.

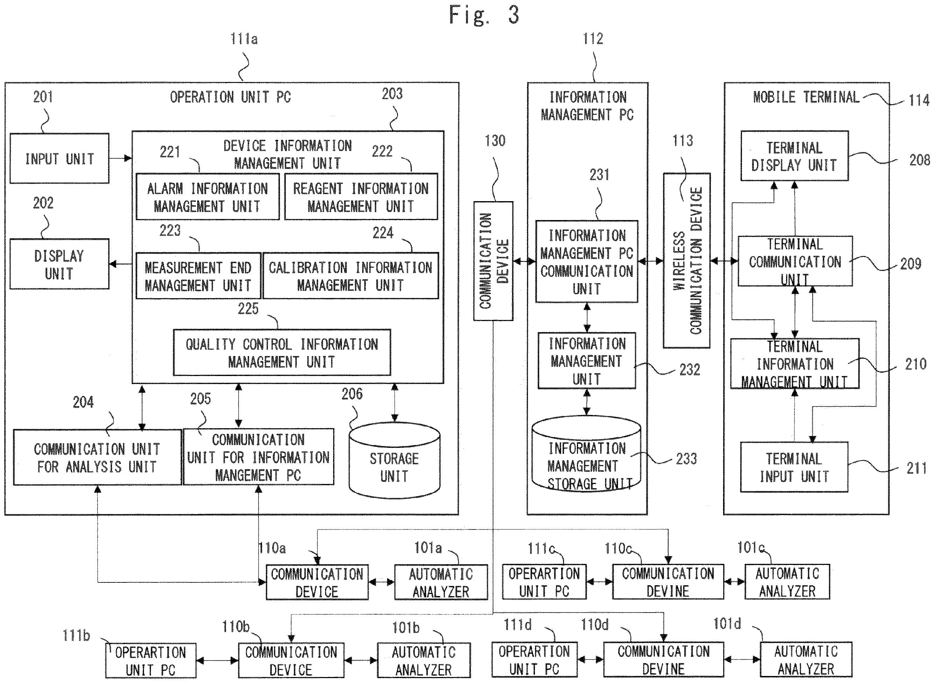

Functions and structures of the operation unit PCs 111a to 111d, the information management PC 112, and the mobile terminal 114 that are provided in the automatic analysis system 100 shown in FIG. 2 will be described with reference to FIG. 3. Since the operation unit PCs 111a to 111d have the same function and structure, the operation unit PC 111a is shown, and the operation unit PCs 111b to 111d are omitted.

The operation unit PC 111a communicates with the automatic analyzer 101a via the communication device 110a, and controls operations of the sample input unit 104, the sample transport unit 105, the sample analysis units 106a, 106b, and 106c, the sample storage unit 109, and the like. The operation unit PC 111a includes an input unit 201, a display unit 202, a device information management unit 203, a communication unit for analysis unit 204, a communication unit for information management PC 205, and a storage unit 206.

The display unit 202 is, for example, a monitor device or the like. The input unit 201 is, for example, a mouse or a keyboard. When the display unit 202 is a touch panel, the input unit 201 may be a graphical user interface (GUI) displayed on the touch panel. A screen created based on information or the like input using the input unit 201 is displayed on the display unit 202.

The device information management unit 203 includes an alarm information management unit 221, a reagent information management unit 222, a measurement end management unit 223, a calibration information management unit 224, a quality control information management unit 225, and the like. The alarm information management unit 221 stores information related to an abnormality in the storage unit 206 in order to notify the display unit 202 or the mobile terminal 114 of the abnormality issued from the automatic analyzer 101a.

The reagent information management unit 222 manages information related to the reagent in the reagent container 107 and the like stored in the reagent discs 108a, 108b, and 108c. The information managed by the reagent information management unit 222 includes a reagent corresponding to an analysis item, a remaining amount of the reagent contained in the reagent container 107, an order of priority of use when a plurality of reagent containers 107 are provided for one analysis item, an expiration date of the reagent, and the like.

The measurement end management unit 223 monitors whether a measurement result of the sample is output from the automatic analyzer 101a. When the measurement result is output, the measurement end management unit 223 stores information related to an end of the measurement of the sample in the storage unit 206 in order to notify the mobile terminal 114. The measurement result output from the automatic analyzer 101a includes not only a measurement result of a sample provided by a patient but also a measurement result of the standard sample used for calibration and quality control.

The calibration information management unit 224 manages information related to calibration executed by the automatic analyzer 101a. The information managed by the calibration information management unit 224 includes information related to a standard sample corresponding to an analysis item of the calibration, information related to the sample rack 103 on which the sample cup 102 is loaded, information related to a calibration curve and a calibration factor that are obtained as a result of the calibration, and the like. The standard sample is dispensed into the sample cup 102.

The quality control information management unit 225 manages information related to quality control executed by the automatic analyzer 101a. The information managed by the quality control information management unit 225 includes information related to the standard sample corresponding to the analysis item of the quality control, information related to the sample rack 103 on which the sample cup 102 is loaded, information related to a result of the quality control, and the like. The standard sample is dispensed into the sample cup 102.

The communication unit for analysis unit 204 controls communication with the automatic analyzer 101a, creates a communication text to be transmitted to the automatic analyzer 101a, for example, a text requesting an analysis item, and distributes information of a communication text received from the automatic analyzer 101a.

The communication unit for information management PC 205 transmits information corresponding to a request from the information management PC 112, for example, information managed by the device information management unit 203, to the information management PC 112.

The information management PC 112 includes an information management PC communication unit 231, an information management unit 232, and an information management storage unit 233.

The information management PC communication unit 231 controls wireless communication with the mobile terminal 114, creates a communication text to be transmitted to the mobile terminal 114, distributes information of a communication text received from the mobile terminal 114, and transmits the information to the operation unit PC 111a.

The information management unit 232 stores identification information of the automatic analyzers 101a to 101d, for example, an IP address in the information management storage unit 233. The information management unit 232 performs communication such as acquisition of device information with the automatic analyzer through the information management PC communication unit 231 according to an instruction content from the mobile terminal 114.

The mobile terminal 114 includes a terminal display unit 208, a terminal communication unit 209, a terminal information management unit 210, a terminal input unit 211, and the like. The mobile terminal 114 communicates with the operation unit PCs 111a to 111d via the wireless communication device 113 and the information management PC 112 to acquire information from the automatic analyzers 101a to 101d and operate the automatic analyzers 101a to 101d.

The terminal communication unit 209 controls communication with the information management PC 112 and the operation unit PCs 111a to 111d, creates a communication text to be transmitted to the information management PC 112, and distributes information of a communication text received from the information management PC 112.

The terminal information management unit 210 displays a screen created based on information received by the terminal communication unit 209 on the terminal display unit 208, and transmits information input to the terminal input unit 211 to the terminal communication unit 209.

The terminal display unit 208 is a touch panel, and the terminal input unit 211 is a GUI displayed on the touch panel. A screen related to calibration and quality control is displayed on the terminal display unit 208, and the displayed screen is switched based on information input to the terminal input unit 211. The screen related to the calibration and the quality control is a screen including, for example, a request list, a preparation list, and a result list.

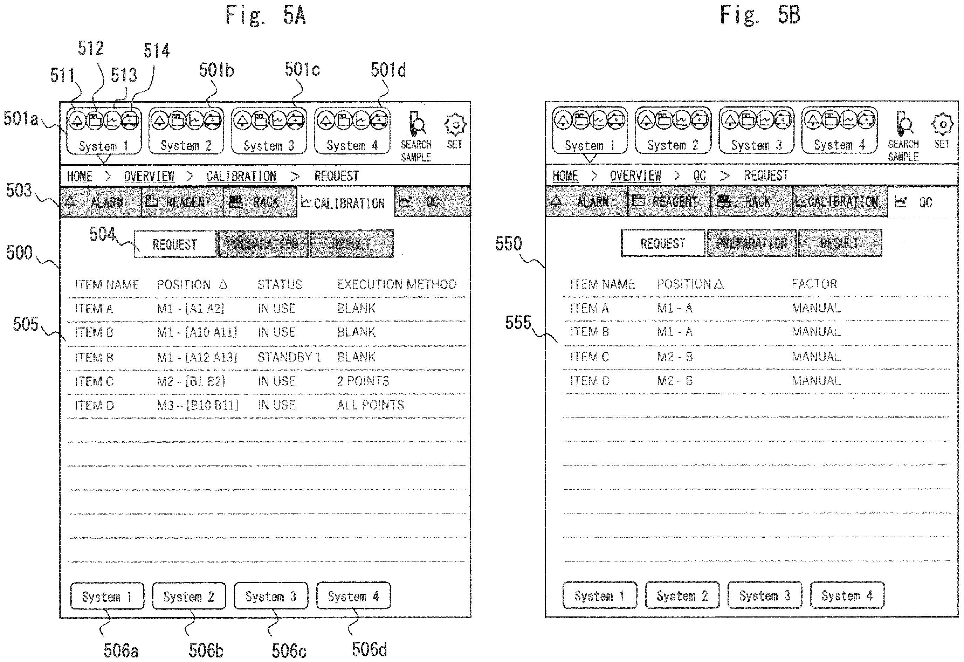

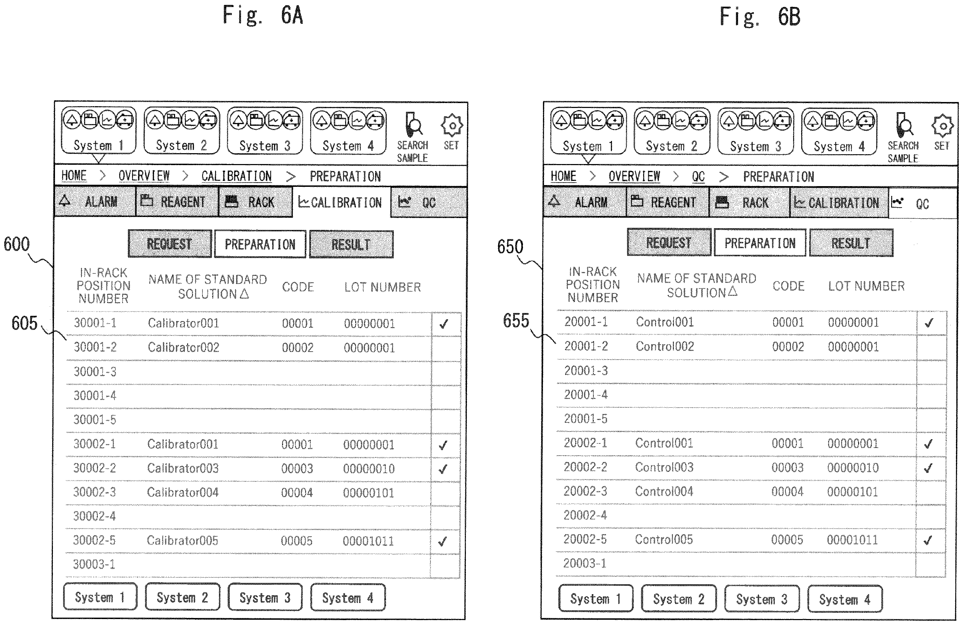

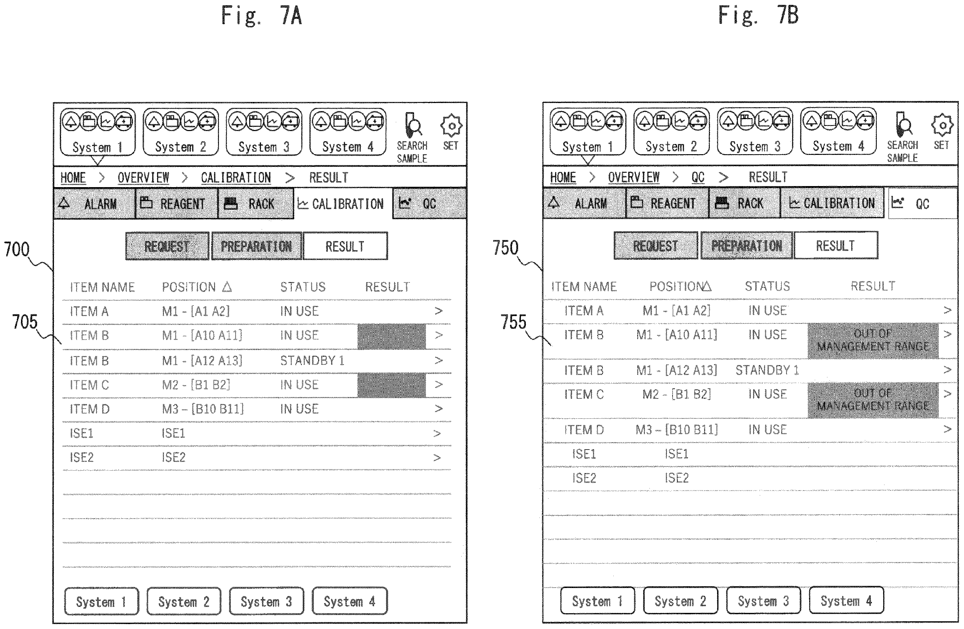

The request list is a list including request information that is information related to a request of calibration or quality control, and will be described later with reference to FIGS. 5A and 5B. The preparation list is a list including preparation information which is information related to preparation of a standard sample used in response to a request of the calibration or the quality control, and will be described later with reference to FIGS. 6A and 6B. The standard sample used for the calibration is referred to as a standard solution, and the standard sample used for the quality control is referred to as control. The result list is a list including result information that is information related to a result of executing the calibration or the quality control in response to the request, and will be described later with reference to FIGS. 7A and 7B.

The information management unit 232, the communication device 130, and the information management PC communication unit 231 shown in FIG. 3 may be provided, as a set, outside the information management PC 112 (for example, in the operation unit PCs 111a, 111b, ..., the automatic analyzers 101a, 101b, ..., and the like). In this case, the communication device 130 does not execute data communication but executes data transfer inside a device and a functional unit in which the set is provided.

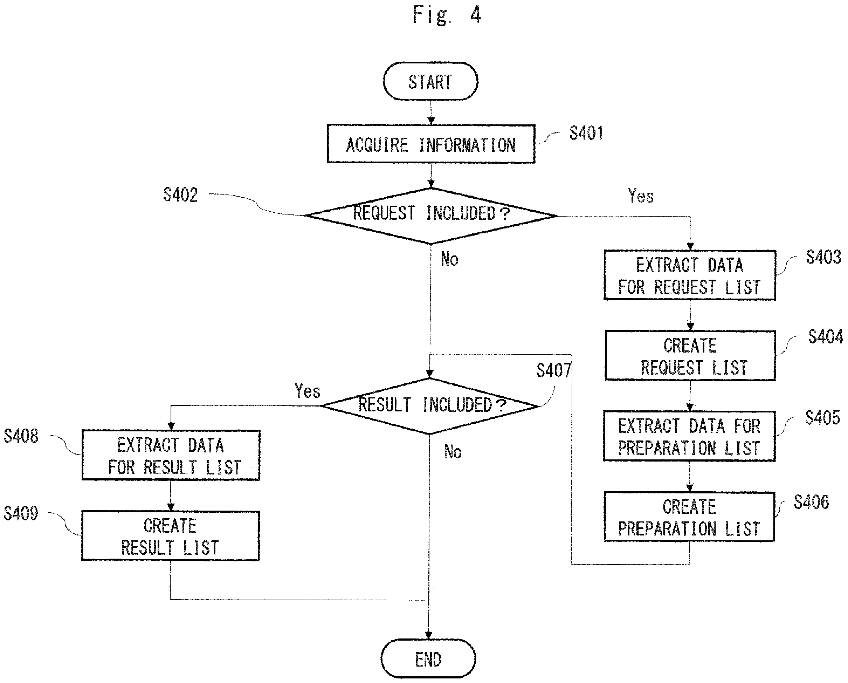

An example of a flow of processing executed by the information management unit 232 of the information management PC 112 will be described for each step with reference to FIG. 4.

### (S401)

The information management unit 232 acquires information of the automatic analyzer 101 according to an instruction content from the mobile terminal 114. The acquired information may be read from the information management storage unit 233 or may be received from an outside via the information management PC communication unit 231.

### (S402)

The information management unit 232 determines whether the information acquired in S401 includes an item related to a request of calibration or quality control. If the item related to the request is included, the processing proceeds to S403, and if the item related to the request is not included, the processing proceeds to S407.

### (S403)

The information management unit 232 extracts data for a request list from the information acquired in S401. Data for a request list of the calibration includes an item name of the calibration, a position where a reagent used for the calibration is provided, an execution method of the calibration, and a usage status of the reagent. Data for a request list of the quality control includes an item name of the quality control and a position where a reagent used for the quality control is provided, and may further include a factor of the request.

### (S404)

The information management unit 232 creates a request list using the data extracted in S403. The created request list is displayed on, for example, the terminal display unit 208.

A calibration request list screen 500, which is an example of a screen including the request list of the calibration, will be described with reference to FIG. 5A. On the calibration request list screen 500, connection device display portions 501a to 501d, a screen transition tab 503, a list tab 504, a calibration request list 505, and device switching buttons 506a to 506d are displayed.

The connection device display portions 501a to 501d are buttons respectively corresponding to the automatic analyzers 101a to 101d provided in the automatic analysis system 100, and indicate that information of which of the automatic analyzers 101a to 101d is displayed. For example, in FIG. 5A, display of information on System 1 among the four automatic analyzers 101a to 101d is indicated by a downward triangle formed on a lower side of the connection device display portions 501a to 501d. At least one automatic analyzer 101 is displayed on the connection device display portion 501, and the number of automatic analyzers 101 is not limited.

Each of the connection device display portions 501a to 501d may display an icon indicating a status of the corresponding automatic analyzer 101. FIG. 5A shows an alarm notification icon 511, a reagent remaining amount shortage notification icon 512, a standard sample measurement end notification icon 513, and an emergency sample measurement end notification icon 514. Display of the alarm notification icon 511, the reagent remaining amount shortage notification icon 512, the standard sample measurement end notification icon 513, and the emergency sample measurement end notification icon 514 is controlled by the terminal information management unit 210.

The alarm notification icon 511 is an icon indicating that an abnormality occurs in the automatic analyzer 101, and blinks or changes color according to a content notified from the alarm information management unit 221. For example, in a case in which a level of the abnormality is two stages of "caution" and "stop", the alarm notification icon 511 changes color to yellow at the "caution" level and blinks in red at the "stop" level. When a plurality of abnormalities are notified to the mobile terminal 114, the alarm notification icon 511 blinks according to a content having the highest abnormality level.

The reagent remaining amount shortage notification icon 512 is an icon indicating that there is shortage in a remaining amount of the reagent contained in the reagent container 107, and blinks or changes color according to a content notified from the reagent information management unit 222. For example, when a level of remaining amount shortage is three stages of "preparation", "shortage", and "warning", the reagent remaining amount shortage notification icon 512 changes color and blinks according to the stage. When the mobile terminal 114 is notified of remaining amount shortages of a plurality of reagents, the reagent remaining amount shortage notification icon 512 corresponding to the most urgent reagent blinks.

The standard sample measurement end notification icon 513 is an icon indicating that measurement related to the calibration or the quality control is ended, and blinks or changes color according to a content notified from the calibration information management unit 224 or the quality control information management unit 225. For example, when the content notified from the calibration information management unit 224 is in two stages of "success" and "failure", the standard sample measurement end notification icon 513 blinks in blue when the stage is "success" and blinks in red when the stage is "failure". When the calibration of the plurality of analysis items is executed and "success" and "failure" are simultaneously notified to the mobile terminal 114, a notification content of "failure" is prioritized, and a corresponding standard sample measurement end notification icon 513 blinks. For example, in a case in which a content notified from the quality control information management unit 225 is in two stages of "within management range" and "out of management range", the standard sample measurement end notification icon 513 blinks in blue when the stage is "within management range", and blinks in red when the stage is "out of management range". When the quality control of a plurality of analysis items is executed and "within management range" and "out of management range" are simultaneously notified to the mobile terminal 114, a notification content of "out of management range" is prioritized, and a corresponding standard sample measurement end notification icon 513 blinks. The standard sample measurement end notification icon 513 may be divided into a calibration icon and a quality control icon. Further, the two stages of "success" and "failure" or "within management range" and "out of management range" may be set to three or more levels.

The emergency sample measurement end notification icon 514 is an icon indicating that measurement of an emergency sample is ended, and blinks or changes color according to a content notified from the measurement end management unit 223. Whether a measured sample is an emergency sample can be identified by a barcode attached to the sample rack 103 on which the sample cup 102 is loaded. That is, when the sample in the sample cup 102 loaded on the sample rack 103 to which the barcode for the emergency sample is attached is measured, the barcode is read and it is recognized that the sample is the emergency sample. When the mobile terminal 114 is notified that the measurement of the emergency sample is ended, the emergency sample measurement end notification icon 514 blinks. When the mobile terminal 114 is notified of remaining amount shortages of a plurality of reagents, the reagent remaining amount shortage notification icon 512 corresponding to the most urgent reagent blinks.

The device switching buttons 506a to 506d are buttons for switching that information of which of the automatic analyzers 101a to 101d provided in the automatic analysis system 100 is to be displayed on the calibration request list screen 500. For example, when the device switching button 506b is pressed while the information of System 1 is displayed, the information displayed on the calibration request list screen 500 is switched to information of System 2.

The screen transition tab 503 is a tab for switching a screen displayed on the terminal display unit 208. The screen transition tab 503 includes, for example, an alarm tab for displaying alarm information, a reagent tab for displaying a usage status of the reagent such as a remaining amount of the reagent, a rack tab for displaying a status of the measured sample, a calibration tab for displaying calibration information, and a QC tab for displaying quality control information. For example, when the calibration tab is pressed while the alarm information is displayed, the calibration information is displayed. When the calibration tab or QC tab is pressed, the list tab 504 is displayed. A calibration and QC tab, which integrates the calibration tab and the QC tab, may be displayed.

The list tab 504 is a tab for switching the list displayed on the terminal display unit 208. The list tab 504 includes, for example, a request tab for displaying a request list, a preparation tab for displaying a preparation list, and a result tab for displaying a result list. For example, when the preparation tab is pressed while the request tab for the calibration tab is displayed, the preparation list is displayed.

In the calibration request list 505, at least an item name of the calibration, a position where a reagent used for the calibration is provided, and an execution method of the calibration are displayed. By displaying the item name, the position, and the execution method, the operator can check a request content of the calibration. The calibration request list 505 may also display the usage status of the reagent. By displaying the usage status of the reagent, the operator can check the usage status of the reagent used for the calibration. By pressing a sort button having an upward triangular shape displayed in a column of the position, sorting may be performed at positions where reagents are provided. By sorting the positions, the operator can check the request content according to arrangement of the positions, and thus a checking time can be shortened.

A quality control request list screen 550, which is an example of a screen including the request list of the quality control, will be described with reference to FIG. 5B. On the quality control request list screen 550, similarly to the calibration request list screen 500, the connection device display portions 501a to 501d, the screen transition tab 503, the list tab 504, and the device switching buttons 506a to 506d are displayed, and a quality control request list 555 is also displayed. Since items other than the quality control request list 555 are the same as those in FIG. 5A, the description thereof is omitted.

In the quality control request list 555, at least an item name of the quality control and a position where a reagent used for the quality control is provided are displayed. By displaying the item name and the position, the operator can check a request content of the quality control. The quality control request list 555 may display a factor of the request. By displaying the factor of the request, the operator can check on what basis the quality control is requested. For example, if "manual" is displayed in a column of the factor, it can be confirmed that the quality control is requested by the operator. In a case in which the item displayed as "manual" does not include the analysis item scheduled by the operator to be requested, it is possible to notice omission of the request.

A screen including a calibration and quality control request list that integrates the calibration request list 505 and the quality control request list 555 may be displayed on the terminal display unit 208. In a case in which the calibration and the quality control are executed in succession, a request item of the calibration displayed in the calibration request list 505 may be displayed in the quality control request list 555.

The description returns to FIG. 4.

### (S405)

The information management unit 232 extracts data for a preparation list from the information acquired in S401. Data for a preparation list of the calibration includes a rack number which is a number assigned to a rack in which a standard solution used for the calibration is provided, an in-rack position number which is a number assigned to a position in the rack in which the standard solution is provided, and a name of standard solution, and may further include a code and a lot number of the standard solution. Data for a preparation list of the quality control may include a rack number which is a number assigned to a rack in which control used for the quality control is provided, an in-rack position number which is a number assigned to a position in the rack in which the control is provided, and a name of control, and may further include a code and a lot number of the control.

### (S404)

The information management unit 232 creates a preparation list using the data extracted in S405. The created preparation list is displayed on, for example, the terminal display unit 208.

A calibration preparation list screen 600, which is an example of a screen including a preparation list of the calibration, will be described with reference to FIG. 6A. On the calibration preparation list screen 600, similar to the calibration request list screen 500, the connection device display portions 501a to 501d, the screen transition tab 503, the list tab 504, and the device switching buttons 506a to 506d are displayed, and a calibration preparation list 605 is also displayed. Since items other than the calibration preparation list 605 are the same as those in FIG. 5A, the description thereof is omitted.

In the calibration preparation list 605, for all analysis items displayed in the calibration request list 505, at least an in-rack position number indicating a position (which position in the rack) at which the standard solution used for calibration is provided and a name of standard solution are displayed in association with each other. Here, the in-rack position number may be configured as, for example, a combination of a rack number (30001 or the like) and a number (1 to 5 or the like) indicating a standard solution arrangement position in the rack. By displaying the in-rack position number and a name of standard solution in association with each other, the operator can check information necessary for preparation of the calibration in response to the request. For example, a row of the in-rack position number in which the standard solution is not provided due to not being set in the device is displayed as a blank, and a name of a corresponding standard solution is displayed in a row of the in-rack position number in which the standard solution is provided. FIG. 6A shows that no standard solution is provided at in-rack position numbers 30001-3 to 30001-5, 30002-4, and 30003-1. With such a display, the operator can determine whether the sample cup 102 is loaded in the sample rack 103, and erroneous placement of the standard solution is prevented.

In the calibration preparation list 605, a code and a lot number of the standard solution may be displayed. By displaying the code and the lot number of the standard solution, the standard solution can be uniquely determined. Further, a check box may be displayed in the calibration preparation list 605. The check box may be used to prevent forgetting to take out the standard solution, for example, and is checked when the standard solution is taken out from a refrigerator in which the standard solution is stored. By pressing a sort button having an upward triangular shape displayed in a column of the name of standard solution, sorting names of standard solutions may be performed. By sorting the names of standard solutions, the operator can check the request content according to arrangement of the names of standard solutions, and thus a checking time can be shortened.

A quality control preparation list screen 650, which is an example of a screen including a preparation list of the quality control, will be described with reference to FIG. 6B. On the quality control preparation list screen 650, similarly to the calibration request list screen 500, the connection device display portions 501a to 501d, the screen transition tab 503, the list tab 504, and the device switching buttons 506a to 506d are displayed, and a quality control preparation list 655 is also displayed. Since items other than the quality control preparation list 655 are the same as those in FIG. 5A, the description thereof is omitted.

In the quality control preparation list 655, for all analysis items displayed in the quality control request list 555, at least an in-rack position number indicating a position (which position in the rack) at which control used for the quality control is provided and a name of control are displayed in association with each other. Here, the in-rack position number may be configured as, for example, a combination of a rack number (20001 or the like) and a number (1 to 5 or the like) indicating a control arrangement position in the rack. By displaying the in-rack position number and the name of control in association with each other, the operator can check information necessary for preparation of the quality control in response to the request. A row of the in-rack position number in which the control is not provided due to not being set in the device is displayed as a blank, and a name of corresponding control is displayed in a row of the in-rack position number in which the control is provided. FIG. 6B shows that no control is provided at in-rack position numbers 20001-3 to 20001-5, 20002-4, and 20003-1. With such a display, the operator can determine whether the sample cup 102 is loaded in the sample rack 103, and erroneous placement of the control is prevented.

In the quality control preparation list 655, a code and a lot number of the control may be displayed. By displaying the code and the lot number of the control, the control can be uniquely determined. Further, a check box may also be displayed in the quality control preparation list 655.

A screen including a calibration and quality control preparation list that integrates the calibration preparation list 605 and the quality control preparation list 655 may be displayed on the terminal display unit 208.

The description returns to FIG. 4.

### (S407)

The information management unit 232 determines whether the information acquired in S401 includes result information of the calibration or the quality control. If the result information is included, the processing proceeds to S408, and if the result information is not included, the flow of the processing ends.

### (S408)

The information management unit 232 extracts data for a result list from the information acquired in S401. Data for a result list of the calibration includes an item name of the calibration, a position where a reagent used for the calibration is provided, and a result of execution of the calibration, and may further include a usage status of the reagent, and a name, a code, and a lot number of a standard solution. Data for a result list of the quality control includes an item name of the quality control, a position where a reagent used for the quality control is provided, a result of execution of the quality control, and may further include a name, a code, and a lot number of a control.

### (S409)

The information management unit 232 creates a result list using the data extracted in S408. The created result list is displayed on, for example, the terminal display unit 208.

A calibration result list screen 700, which is an example of a screen including a result list of the calibration, will be described with reference to FIG. 7A. On the calibration result list screen 700, similar to the calibration request list screen 500, the connection device display portions 501a to 501d, the screen transition tab 503, the list tab 504, and the device switching buttons 506a to 506d are displayed, and a calibration result list 705 is also displayed. Since items other than the calibration result list 705 are the same as those in FIG. 5A, the description thereof is omitted.

In the calibration result list 705, at least an item name of the calibration, a position where a reagent used for the calibration is provided, and a result of execution of the calibration are displayed. As a result of the execution of the calibration, for example, "success" or "failure", which is the content notified from the calibration information management unit 224, is displayed. By displaying the item name, the position, and the execution result, the operator can grasp the result of the calibration executed in response to the request. Instead of displaying "failure", a factor of failure, for example, "reagent shortage" may be displayed.

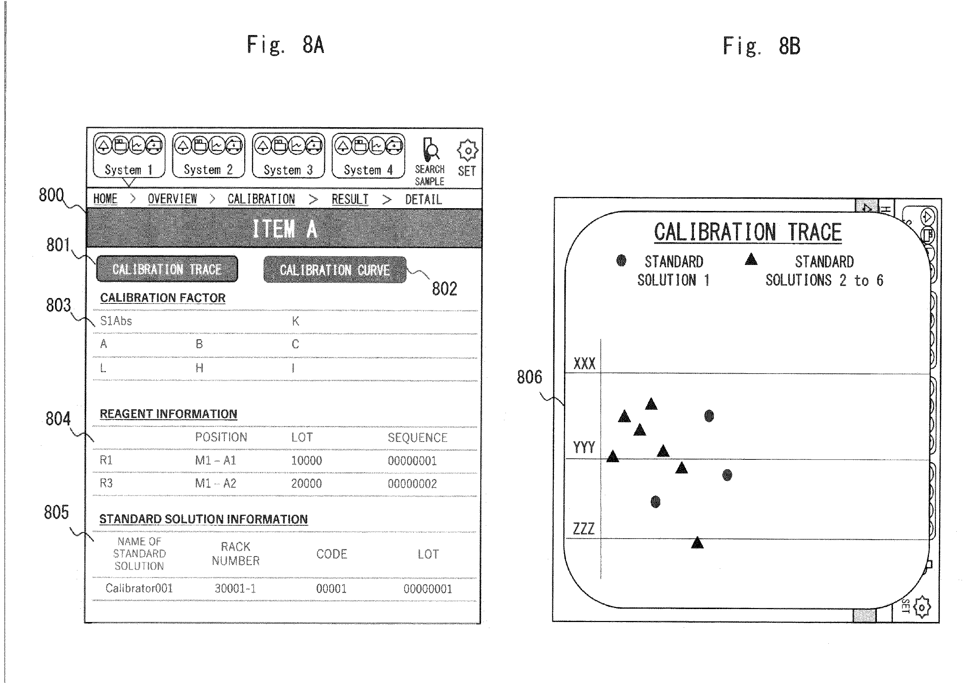

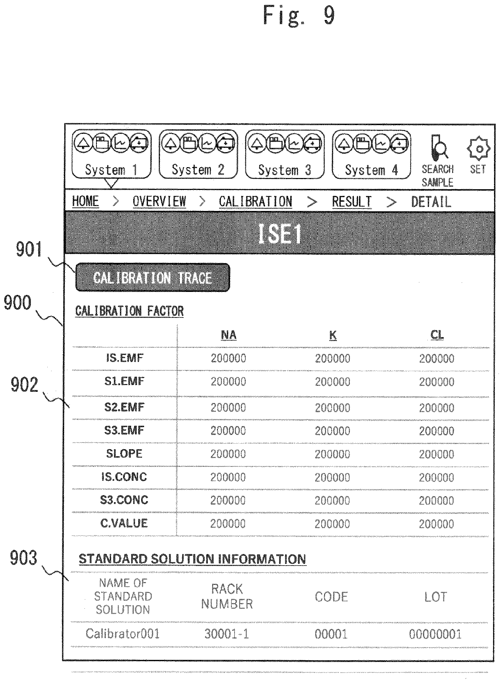

In the calibration result list 705, a name, a code, and a lot number of the standard solution may be displayed. By displaying the name of standard solution, the standard solution used when the result is obtained can be checked. By displaying the code and the lot number of the standard solution, the standard solution can be uniquely determined. Further, a ">" link for calling a detailed result may be displayed in the calibration result list 705. When the ">" link is pressed, a screen for displaying a detailed result of the calibration is called. A screen for displaying the detailed result of the calibration will be described later with reference to FIGS. 8A, 8B, and 9.

A quality control result list screen 750, which is an example of a screen including a result list of the quality control, will be described with reference to FIG. 7B. On the quality control result list screen 750, similarly to the calibration request list screen 500, the connection device display portions 501a to 501d, the screen transition tab 503, the list tab 504, and the device switching buttons 506a to 506d are displayed, and a quality control result list 755 is also displayed. Since items other than the quality control result list 755 are the same as those in FIG. 5A, the description thereof is omitted.

In the quality control result list 755, at least an item name of the quality control, a position where a reagent used for the quality control is provided, and a result of execution of the quality control are displayed. As a result of the execution of the calibration, for example, "within management range" or "out of management range", which is a content notified from the quality control information management unit 225, is displayed. By displaying the item name, the position, and the execution result, the operator can grasp the result of the quality control executed in response to the request.

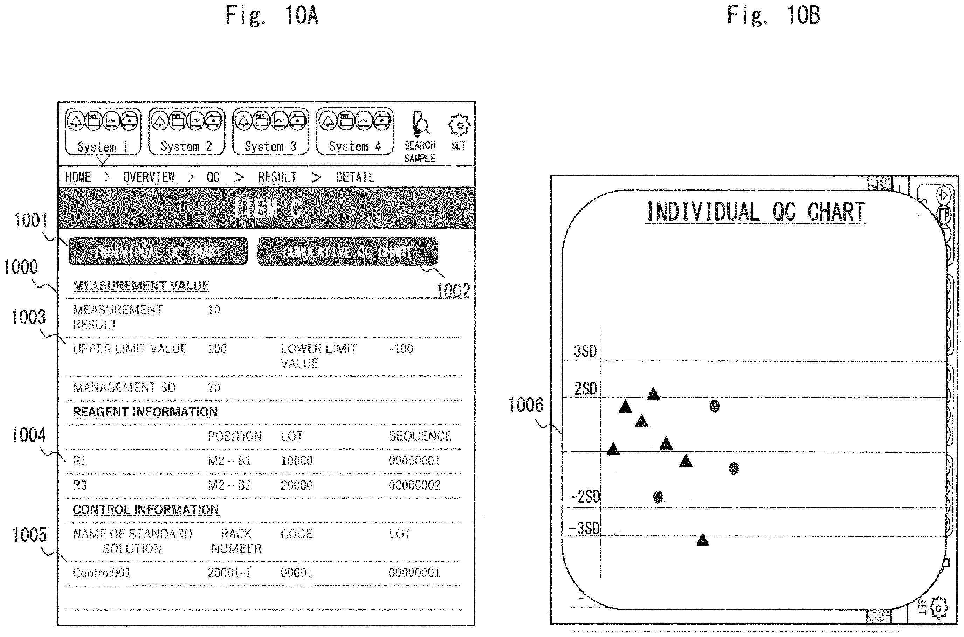

In the quality control result list 755, a name, code, and a lot number of the control may be displayed. By displaying the name of control, the control used when the result is obtained can be checked. By displaying the code and the lot number of the control, the control can be uniquely determined. Further, a ">" link for calling a detailed result may be displayed in the quality control result list 755. A screen for displaying the detailed result of the quality control will be described later with reference to FIGS. 10A and 10B.

A colorimetric calibration detailed result screen 800, which is an example of a screen including a detailed result of the calibration, will be described with reference to FIG. 8A. On the colorimetric calibration detailed result screen 800, a colorimetric calibration trace button 801, a calibration curve button 802, a colorimetric calibration factor 803, colorimetric reagent information 804, and colorimetric standard solution information 805 are displayed. The colorimetric calibration trace button 801 is a button for displaying a calibration trace graph 806 shown in FIG. 8B. The calibration trace graph 806 is a graph in which a vertical axis represents a measurement value and a horizontal axis represents the number of times of measurement. Measurement values on the vertical axis of the calibration trace graph 806 have different units for each item. The calibration trace graph 806 may be displayed such that the operator can check the calibration trace graph 806 regardless of whether the mobile terminal 114 is horizontally oriented or vertically oriented.

The calibration curve button 802 is a button for displaying a calibration curve graph in which a vertical axis represents absorbance and a horizontal axis represents a concentration of a specific component in a sample. The colorimetric calibration factor 803 is a coefficient calculated based on the absorbance or the like obtained by measuring a standard solution for calibration. Coefficients include SlAbs, K, A, B, C, L, H, and I, and these coefficients are used to create the calibration curve. L is a coefficient indicating a degree of serum turbidity, H is a coefficient indicating a degree of hemolysis of serum, and I is a coefficient indicating a degree of yellowness of serum. Display of the colorimetric calibration factor 803 is essential.

The colorimetric reagent information 804 is information related to a reagent used for measurement of a colorimetric item, and a position, a lot, and a sequence are associated with each of reagent numbers R1 and R3. It is preferable that the colorimetric reagent information 804 is displayed. The colorimetric standard solution information 805 is information related to a standard solution used for measuring a colorimetric item, and a rack number, an in-rack position number, a code, and a lot are associated with each name of standard solution.

An electrolyte calibration detailed result screen 900, which is an example of a screen including a detailed result of the calibration, will be described with reference to FIG. 9. An electrolyte calibration detailed result screen 900 displays an electrolyte calibration trace button 901, an electrolyte calibration factor 902, and electrolyte standard solution information 903. The electrolyte calibration trace button 901 is a button for displaying a calibration trace graph in which a vertical axis represents a measurement value and a horizontal axis represents the number of times of measurement.

The electrolyte calibration factor 902 is a coefficient used to create a calibration curve for ion selective electrode (ISE), and includes IS.EMF, S1.EMF, S2.EMF, S3.EMF, SLOPE, IS.CONC, S3.CONC, and C.VALUE. IS.EMF is an internal electromotive force, S1.EMF is an electromotive force of a standard solution having a low concentration, S2.EMF is an electromotive force of a standard solution having a high concentration, and S3.EMF is an electromotive force of a standard solution having an intermediate concentration. SLOPE is a slope value, IS.CONC is a concentration of an internal standard solution, S3.CONC is a measured concentration of the standard solution having the intermediate concentration, and C.VALUE is a correction coefficient. Display of the electrolyte calibration factor 902 is essential. The electrolyte standard solution information 903 is information related to a standard solution used for measuring an electrolyte item, and a rack number, an in-rack position number, a code, and a lot are associated with each name of standard solution.

A quality control detailed result screen 1000, which is an example of a screen including a detailed result of the quality control, will be described with reference to FIG. 10A. On the quality control detailed result screen 1000, an individual QC chart button 1001, a cumulative QC chart button 1002, a measurement value 1003, reagent information 1004, and control information 1005 are displayed. The individual QC chart button 1001 is a button for displaying a daily chart 1006 shown in FIG. 10B. The daily chart 1006 is a graph in which a vertical axis represents a measurement value for a management range and a horizontal axis represents the number of times of measurement, and is used to check transition of the measurement value in a day. The measurement value for the management range, which is the vertical axis of the daily chart 1006, is displayed as a value for a standard deviation (SD) of the management range when an average value of the management range is set to 0. The cumulative QC chart button 1002 is a button for displaying a daily difference chart in which the daily chart 1006 is accumulated day by day and daily difference data is graphed. The daily chart 1006 and the daily difference chart may be displayed such that the operator can check the daily chart 1006 and the daily difference chart regardless of whether the mobile terminal 114 is horizontally oriented or vertically oriented.

The measurement value 1003 is data related to a result of execution of the quality control, and includes a measurement result, an upper limit value, a lower limit value, and a management SD. The measurement result is a measurement value measured by the execution of the quality control, and it is confirmed that the measurement result is within the management range determined according to the upper limit value and the lower limit value. The management SD is a standard deviation of an allowable variation of the control. Display of the measurement value 1003 is essential.

The reagent information 1004 is information related to a reagent used for the quality control, and a position, a lot, and a sequence are associated with each of the reagent numbers R1 and R3. It is preferable that the reagent information 1004 is displayed. The control information 1005 is information related to control used for the quality control, and a rack number, an in-rack position number, a code, and a lot are associated with each name of control.

According to the flow of the processing described with reference to FIG. 4, at least one of the request list, the preparation list, and the result list including information related to the calibration or the quality control is displayed on the mobile terminal 114. By displaying at least one of the request list, the preparation list, and the result list, it is possible to shorten a checking time in each step of the request, the preparation, and the result of the calibration or the quality control.

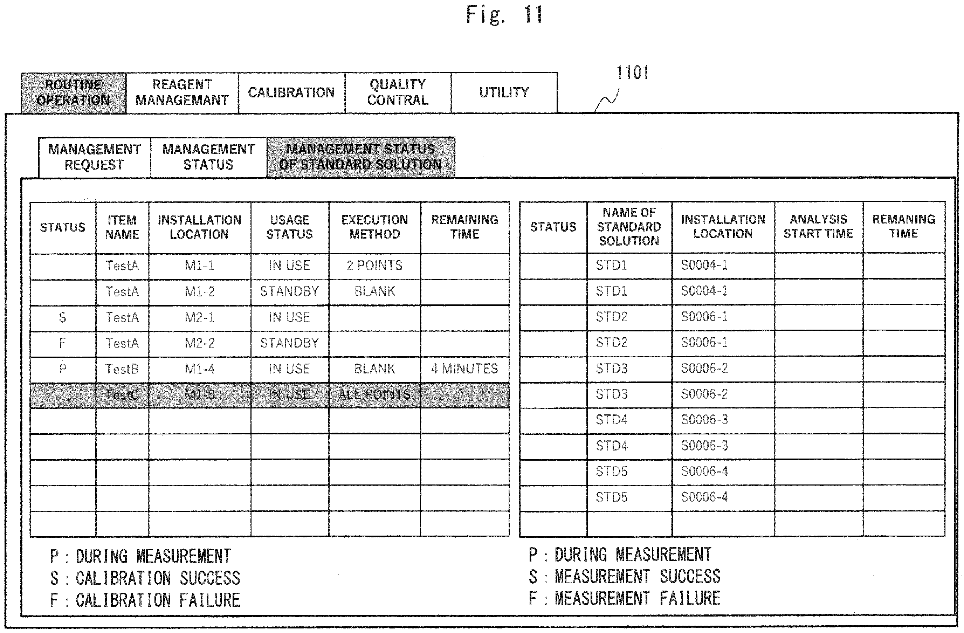

Display of information related to the calibration or the quality control is not limited to the mobile terminal 114, and may be the fixed monitor device 115. An example of a screen displayed on the fixed monitor device 115 will be described with reference to FIGS. 11 to 13.

FIG. 11 is an example of a routine operation monitor screen 1101 on which information necessary for a routine operation performed by the operator is displayed. On the routine operation monitor screen 1101, the standard solution required for each analysis item is displayed. That is, although the routine operation monitor screen 1101 is suitable for checking each analysis item, it is necessary to check all analysis items in order to check the standard solution required for each analyzer. On the other hand, in the calibration preparation list screen 600 shown in FIG. 6A, since the standard solution necessary for each analyzer is collectively displayed, it is possible to shorten a time required for checking the preparation of the calibration.

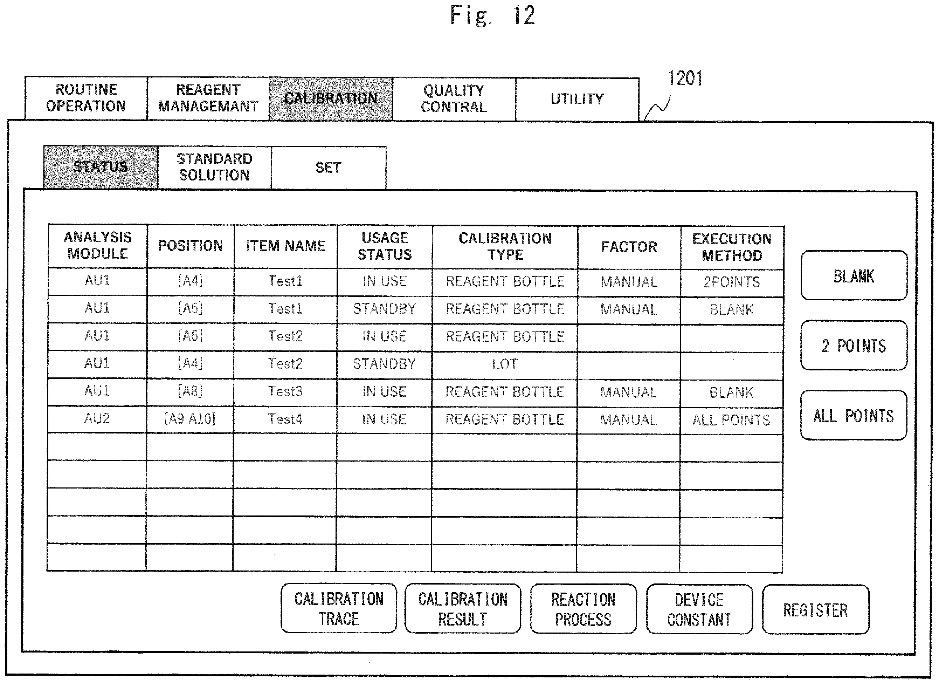

FIG. 12 is an example of a calibration monitor screen 1201 that displays entire information related to the calibration. Although the calibration monitor screen 1201 is suitable for checking the entire information related to the calibration, for example, the operator needs to extract a corresponding item in order to check an item requested by the operator. On the other hand, in the quality control request list screen 550 shown in FIG. 5B, since only the items requested by the operator are displayed, it is possible to shorten a time required for checking the request of the quality control.

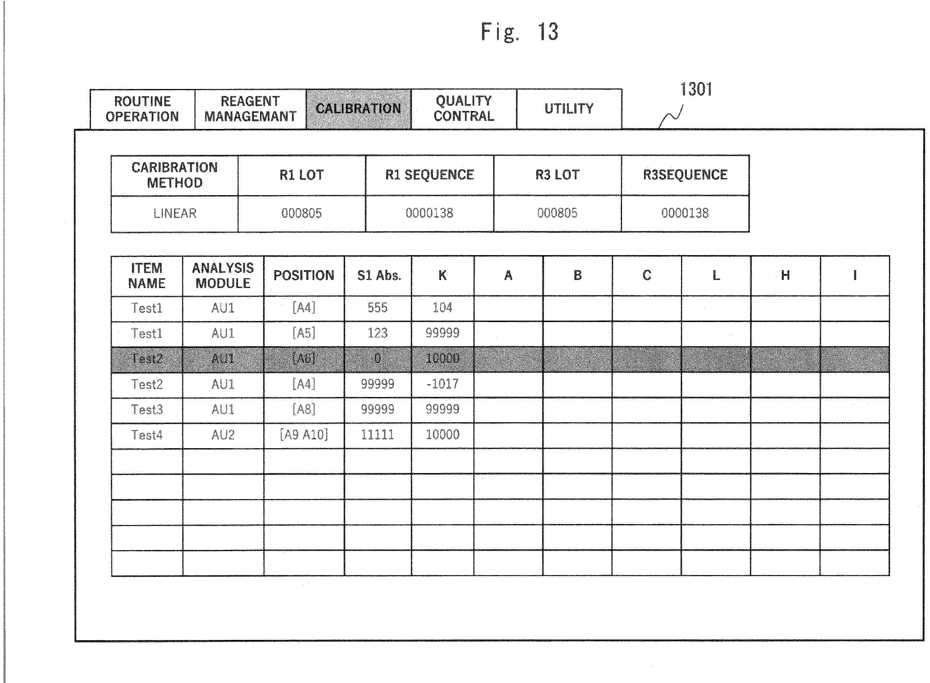

FIG. 13 is an example of a calibration result monitor screen 1301 that displays a result of execution of calibration of analysis items displayed on the calibration monitor screen 1201. Although the calibration result monitor screen 1301 is suitable for checking all results of the execution of the calibration, for example, information displayed needs to be reviewed in order to analyze a factor at the time of failure of the calibration. On the other hand, since the colorimetric calibration detailed result screen 800 shown in FIG. 8A displays the colorimetric reagent information 804 and the colorimetric standard solution information 805, it is possible to quickly determine whether the reagent or the standard solution is a factor of the failure.

The embodiment of the invention is described above. The invention is not limited to the above embodiment, and the components may be modified without departing from the scope of the invention. A plurality of components disclosed in the above embodiment may be appropriately combined. Further, several components may be omitted from all the components shown in the above embodiment.

### Reference Signs List

- 100: automatic analysis system
- 101: automatic analyzer
- 102: sample cup
- 103: sample rack
- 104: sample input unit
- 105: sample transport unit
- 106: sample analysis unit
- 107: reagent container
- 108: reagent disc
- 109: sample storage unit
- 110: communication device
- 111: operation unit PC
- 112: information management PC
- 113: wireless communication device
- 114: mobile terminal
- 115: fixed monitor device
- 120: reaction disc
- 121: sample dispensing unit
- 122: reagent dispensing unit
- 123: photometric unit
- 130: communication device
- 201: input unit
- 202: display unit
- 203: device information management unit
- 204: communication unit for analysis unit
- 205: communication unit for information management PC
- 206: storage unit
- 208: terminal display unit
- 209: terminal communication unit
- 210: terminal information management unit
- 211: terminal input unit
- 221: alarm information management unit
- 222: reagent information management unit
- 223: measurement end management unit
- 224: calibration information management unit
- 225: quality control information management unit
- 231: information management PC communication unit
- 232: information management unit
- 233: information management storage unit
- 500: calibration request list screen
- 501: connection device display portion
- 503: screen transition tab
- 504: list tab
- 505: calibration request list
- 506: device switching button
- 511: alarm notification icon
- 512: reagent remaining amount shortage notification icon
- 513: standard sample measurement end notification icon
- 514: emergency sample measurement end notification icon
- 550: quality control request list screen
- 555: quality control request list
- 600: calibration preparation list screen
- 605: calibration preparation list
- 650: quality control preparation list screen
- 655: quality control preparation list
- 700: calibration result list screen
- 705: calibration result list
- 750: quality control result list screen
- 755: quality control result list
- 800: colorimetric calibration detailed result screen
- 801: colorimetric calibration trace button
- 802: calibration curve button
- 803: colorimetric calibration factor
- 804: colorimetric reagent information
- 805: colorimetric standard solution information
- 806: calibration trace graph
- 900: electrolyte calibration detailed result screen
- 901: electrolyte calibration trace button
- 902: electrolyte calibration factor
- 903: electrolyte standard solution information
- 1000: quality control detailed result screen
- 1001: individual QC chart button
- 1002: cumulative QC chart button
- 1003: measurement value
- 1004: reagent information
- 1005: control information
- 1101: routine operation monitor screen
- 1201: calibration monitor screen
- 1301: calibration result monitor screen

## Claims

1. An automatic analysis system comprising:
an analyzer configured to execute, based on a relative relationship between a measurement value of a standard sample whose property is known and a measurement value of a sample, an analysis to derive a property of the sample; and
a display device configured to display information related to calibration or quality control executed for the analyzer using the standard sample, wherein
the display device is configured to display at least one of a request list including request information related to a request for at least one of the calibration and the quality control and a preparation list including preparation information related to preparation of the standard sample used for at least one of the calibration and the quality control in response to the request, and
the preparation list displays a name of the standard sample and an in-rack position number assigned to a position of a rack in which the standard sample is provided in association with each other, and displays a blank in a field of a standard sample corresponding to an in-rack position number in which the standard sample is not to be provided.

2. The automatic analysis system according to claim 1, wherein
the display device is configured to further display a result list including result information related to a result obtained by executing at least one of the calibration and the quality control in response to the request.

3. The automatic analysis system according to claim 1, wherein
the display device is configured to display the preparation list of at least one of the calibration and the quality control.

4. The automatic analysis system according to claim 1, wherein
the preparation list further includes a code and a lot number of the standard sample.

5. The automatic analysis system according to claim 1, wherein
the request list of the calibration includes an item name of the calibration, a position where a reagent used for the calibration is provided, an execution method of the calibration, and a usage status of the reagent.

6. The automatic analysis system according to claim 1, wherein
the request list of the quality control includes an item name of the quality control, a position where a reagent used for the quality control is provided, and a factor of the request.

7. The automatic analysis system according to claim 2, wherein
the result list of the calibration includes an item name of the calibration, a position where a reagent used for the calibration is provided, a result of executing the calibration, a usage status of the reagent, and a name, a code, and a lot number of the standard sample.

8. The automatic analysis system according to claim 2, wherein
the result list of the quality control includes an item name of the quality control, a position where a reagent used for the quality control is provided, a result of executing the quality control, and a name, a code, and a lot number of the standard sample.

9. The automatic analysis system according to claim 1, wherein
the display device is a mobile terminal carried and used by an operator.

10. The automatic analysis system according to claim 9, wherein
the mobile terminal is configured to display a button for selecting any analyzer from a plurality of the analyzers in at least one of the request list and the preparation list.
